# EUROPEAN PATENT SPECIFICATION

(11) **EP 2 034 088 B1**
(45) Date of publication and mention of the grant of the patent: **07.11.2012**
(21) Application number: 07017629.2
(22) Date of filing: 10.09.2007
(51) Int. Cl.: D06N 7/00, B32B 5/02, B32B 27/12, A41D 31/00, D06M 11/44, D06M 11/45, D06M 11/47, D06M 11/68, D06M 15/244, D06M 15/564, D06M 15/643

(54) **Fabric and fabric laminate**
Textiles Flächengebilde und Textilstofflaminat
Étoffe et stratifié d'étoffe

(43) Date of publication of application: 11.03.2009
(73) Proprietor: W.L.GORE & ASSOCIATES GMBH, 85640 Putzbrunn (DE)
(72) Inventor: Stübiger, Werner, 85579 Neubiberg (DE)
(74) Representative: Klunker . Schmitt-Nilson . Hirsch

(56) References cited:
- EP-A- 1 264 036
- WO-A-89/08553
- US-A- 5 418 051

## Description

### Field of the invention

The application relates to an improved fabric made of multifilament yarns with a high air-permeability and with reduced water absorption. Furthermore, the application relates to a fabric structure comprising a barrier layer, the fabric structure showing a high air-permeability or high water vapor permeability and reduced water absorption.

### Background of the invention

Fabrics for clothing with a reduced ability to absorb water after contact with it are desired. Yarns for fabrics may be comprised of multi-filaments or staple fibers. Such yarns in the form of fiber/filament bundles comprise voids between the fibers/filaments. In case the yam comes into contact with a liquid like water, most of the liquid wicks into the voids of the yam. This wicking process results in a textile that will be wet, heavy and is very often difficult to dry.

One possibility to overcome this drawback is providing the fabrics with hydrophobic finishes usually based on fluorocarbons. But these fabrics lose their water repellency after just a few washes.

Another possibility of how to treat a textile to make it water repellent is disclosed in EP 1 264 036 B1 in the name of W.L.Gore & Associates GmbH. EP 1 264 036 B1 describes a fabric comprised of yarns which are made up of filaments, the fabric having interstices between the yarns. The yarns are substantially entirely coated with a silicone coating, but the silicone coating does not completely fill the openings/interstices between the yarns. The surfaces of the yarns are completely covered by the silicone as well as the crossing points of the yarns. The coated textile is highly water repellent because of the fact that the silicone used is hydrophobic. On the other hand the complete coating of the yarns leads to the loss of the textile nature of the fabric. The soft and textile hand of the fabric no longer exists and the resultant sticky hand of the coated fabric is not always desired.

US 5,418,051 A assigned to Nextec Applications, Inc., relates to a flexible porous web which contains an internal coating of a silicone polymer composition. The web can comprise fibers in the form of monofilaments, yarns, staples or the like. The web may be a fabric which is woven or non-woven with fibers that can be of any desired composition. The web contains a curable silicone polymer impregnant that is present as a film, or coating, or a layer within a web that envelopes at least a portion of the fibers of the web. The interstices in the region of the internal coating are mostly filled or plugged by impregnant. The outer surfaces of the web are substantially free of impregnant. Silicone polymer which substantially completely encapsulates a web's fibers and forms an internal layer means, that the silicone polymer is located mostly upon surface portions of the fibers in the interior of the web. Based on the internal coating layer, the fibers of the outer surfaces of the web are uncoated and therefore able to wick water into the web. In order to avoid this, a fluorochemical is used to impregnated the web before the silicone polymer is applied. It is known that such impregnated webs lose their water repellency after just a few washes. Furthermore, such webs with an internal coating layer are not air-permeable because the interstices in the region of the internal layer are filled by the silicone polymer.

The present invention overcomes the deficiencies described above.
One object of the present invention is to provide for an improved fabric and a fabric structure having a very low water absorption rate.
Another object of the present invention is to provide a fabric with a very low water absorption rate and a high air-permeability.
A further object of the present invention is to provide a fabric with a very low water absorption rate, a high air-permeability and a soft textile hand.
Another object of the present invention is to provide a fabric and a fabric structure with a very low water absorption rate, high water vapor permeability and waterproof properties.

### Summary of the invention

The present invention provides a fabric according to claim 1, a fabric structure according to claim 41 and a method claim according to claim 52. The dependent claims refer to embodiments of said fabric and said fabric structure.

In a first aspect of the invention a fabric comprises yarns and interstices between the yarns, the interstices between the yarns having an average width of greater than 100µm. At least one of the yarns is comprised of multiple fibers. Said at least one yam has voids between the fibers wherein the voids are filled up with a polymer material. The interstices remain open and the size of the interstices is the same as before the treatment.

The fabric itself can be treated or the fabric joined to a barrier layer forming a fabric structure for example in the form of a laminate (sixth aspect of the invention), can be treated according to the invention.

In an embodiment all yarns of the fabric are comprised of multiple fibers and have voids between the fibers which are filled up with a polymer material.

The filling of the voids between the fibers with the polymer material prevents the absorption of water into said voids. The polymer material is substantially only located within the voids of the yam and has embedded the fibers within the outer surface of said yam. Therefore, the outer surface of said yam remains substantially unchanged and at least partially free of polymer material. At least partially free of polymer material means that small portions of the polymer material may stay on parts of the outer surface of the yam as a very thin layer after the impregnation process. This leads to a fabric with a substantially unchanged textile hand, meaning that the textile nature/characteristic of the fabric is maintained and the fabric itself is soft, with a good feel, a firm grip and no sticky touch.

Such yarns and respective fabrics with said filled voids prevent liquid from wicking into the yam. A liquid can stick only to the outer surface of the yam but is not able to wet the void volume within the yam. Therefore the water absorption rate of the fabric is very low. The water absorption of the fabric is less than 50%, less than 40%, less than 30%, less than 20% or less than 10% according to the Bundesmann test (DIN EN 29865, 1991).

To ensure air-permeability and water vapor permeability, the fabrics chosen have interstices between the yarns with an average width of greater than 100µm which remain open even after the filling process of the at least one yam. In a further embodiment the interstices have an average width of between 150µm and 250µm. The width of the interstices is substantially unchanged and remains open even after the voids have been filled up. This leads to a high air-permeability and water vapor permeability of the inventive fabric.
The air permeability is greater than 300 l/m²/s in one embodiment. In a further embodiment the air-permeability is greater than 500 l/m²/s and furthermore greater than 1000 l/m²/s. Furthermore the fabric has a chemical run-off rate greater than 90% (EN-ISO 6530).

In a second aspect of the invention a fabric comprises yarns and interstices between the yarns, the interstices between the yarns having an average width greater than 100µm. At least one of the yarns is comprised of multiple fibers. Said at least one yam has voids between the fibers and the voids are filled up with a polymer material wherein the interstices remain open, with the fabric having a water absorption of less than 20% according to a subsequent 10min Bundesmann rain test referred to in DIN EN 29865 (1991). In one embodiment the water absorption of the treated fabric is less than 10%.

In a third aspect of the invention a fabric comprises yarns and interstices between the yarns, the interstices between the yarns having an average width of greater than 100µm. At least one of the yarns is comprised of multiple fibers. Said at least one yarn has voids between the fibers, with the voids being filled up with a polymer material wherein the interstices remain open, with the fabric having a water absorption of less than 20% according to a subsequent 10min Bundesmann rain test to DIN EN 29865 (1991) and an air-permeability (EN ISO 9237, 1995) of the fabric of greater than 500 l/m²/s. In a further embodiment the air permeability of the fabric is greater than 1000 l/m²/s.

In a fourth aspect of the invention a fabric comprises yarns and interstices between the yarns, the interstices between the yarns having an average width of greater than 100µm. At least one of the yarns is comprised of multiple fibers. Said at least one yam comprises voids between the fibers wherein the voids are filled up with a polymer material. A water vapor permeable layer is adjacent to one side of said fabric, may form a fabric structure. The water vapor permeable layer may be a water vapor permeable barrier layer or a water vapor permeable textile layer. Said barrier layer might be also liquid impermeable and/or gas impermeable. In most embodiments the barrier layer is a membrane or film and is combined with at least one backer textile layer.

The term "water vapor permeable layer" means any layer which ensures a water vapor transmission through said layer. It might be a textile layer or a barrier layer as described herein. The barrier layer may have a water vapor permeability measured as water vapor transmission resistance (Ret) of less than 20 m²Pa/W.

The term "barrier layer" as used herein is defined as a film, membrane or coating that provides a barrier to air penetration as a minimum, and ideally to a range of other gases, for example gas chemical challenges. The barrier layer is air impermeable and/or gas impermeable. The barrier layer is considered air impermeable if it has an air permeability of less than 25 l/m², in particular embodiments if it has an air permeability of less than 5 l/m² (EN ISO 9237, 1995). In a further embodiment the barrier layer also provides a barrier to liquid water penetration as a minimum, and ideally to a range of liquid chemical challenges. The layer is considered liquid impermeable if it prevents liquid water penetration at a pressure of at least 0.13 bar. The water penetration pressure is measured on a sample of the barrier layer based on the same conditions described with respect to the ISO 811, described herein.
The barrier layer comprises in one embodiment at least one water vapor permeable and air-impermeable membrane to provide air impermeable but water vapor permeable (breathable) characteristics. Preferably the membrane is also liquid impermeable, at least water impermeable.
A suitable water impermeable and water vapor permeable flexible membrane for use herein is disclosed in US Patent No. 3,953,566 which discloses a porous expanded polytetrafluoroethylene (PTFE) material. The expanded porous PTFE has a micro-structure characterized by nodes interconnected by fibrils. If desired, the water impermeability may be enhanced by coating the expanded PTFE with a hydrophobic and/or oleophobic coating material.
The water impermeable and water vapor permeable membrane might also be a micro-porous material such as a high molecular weight micro-porous polyethylene or polypropylene, micro-porous polyurethanes or polyesters, or a hydrophilic monolithic polymer such as polyurethanes.

The combination of the barrier layer with the inventive fabric provides clothing which offers good comfort and facilitates water repellency. By "clothing" is meant any article that can be worn, including footwear, hats, gloves, shirts, coats, trousers, etc.

In a fifth aspect of the invention a fabric comprises yarns and interstices between the yarns, the interstices between the yarns having an average width of greater than 100µm. At least one of the yarns is comprised of multiple fibers. Said at least one yam has voids between the fibers wherein the voids are filled up with a polymer material comprised of at least one silicone. A water vapor permeable and liquid water impermeable membrane comprised of porous expanded polytetrafluoroethylene (ePTFE) is adjacent to one side of the fabric. In an embodiment the membrane is laminated to at least one backer textile layer using at least one discontinuous adhesive.

In a sixth aspect of the invention a fabric structure comprises at least two layers. The first layer is a fabric comprising yarns and interstices between the yarns, the interstices between the yarns having an average width of greater than 100µm. At least one of the yarns is comprised of multiple fibers. The second layer is a water vapor permeable barrier layer joined to one side of the first layer. Said yam has voids between the fibers wherein the voids are filled up with a polymer material.
The barrier layer can be also liquid impermeable and/or air impermeable.
The two layers are attached together by at least one adhesive forming a fabric laminate.

The polymer material can be selected from the group comprising silicone, non-swelling polyurethane, amorphous perfluoropolymer or mixtures thereof. The polymer material needs a very low viscosity to be wicked by capillary forces into the voids of the yam. Furthermore, the low viscosity prevents closed films from being formed between the interstices of the fabric. Therefore, the interstices are kept open even after the treatment. Possible polymer materials for use have a viscosity prior to filling up the voids of less than 3000mPa/s. In a further embodiment the viscosity of the polymer material is less than 2000mPa/s. In another embodiment the viscosity of the polymer material is less than 1000mPa/s. Furthermore the polymer material has substantially no swelling properties and/or solubility in liquids. The polymer material may or may not be cross-linked.

Commercially available amorphous perfluoropolymers are known as Teflon ® AF (DuPont), Hyflon ® AD (Solvay Solexis) and Cytop ® (Asahi Glass). Teflon ® AF is a family of amorphous fluoropolymers made by DuPont, which are made by the copolymerization of 2,2-bis-trifluoromethyl-4,5-difluoro-1,3-dioxole (PDD) with other fluorine-containing monomers. At present the commercial Teflon ® AF grades are copolymers of PDD and tetrafluoroethylene (TFE) and are known as Teflon ® AF1600 and Teflon ® AF2400.

In particular embodiments the polymer material is comprised of at least one silicone.

The present invention describes an improved fabric which offers higher comfort and protection. Based on the filled voids within the yam and the open interstices between the yarns the fabric is no longer water wicking and shows a very low water absorption rate, a faster re-drying process, no cold bridges and a very low increase of weight after rain. Furthermore, the fabric has a high water vapor permeability based on the open interstices.

The impregnated fabric according to the invention offers also flame resistance and non melting properties. The non-melt properties are very useful in fabric applications for firemen. The non-melt properties are proofed by the folded edge test (NFPA 1971).

The impregnated fabric of this invention has improved flame-resistance in comparison with an untreated fabric. The improved flame -resistance is maintained by the silicone as filling material because the silicone used has a high LOI (limited oxygen index). The LOI of silicone is about 24-35. One method to determine the flame resistance of the coated fabric is described in the German/European standard DIN-EN 532 (1994), which describes a method of determining the flame spread on textiles and textile materials.

In a seventh aspect of the invention a method for minimizing the water vapor absorption rate of a fabric is described, which comprises the steps of:
a) Providing a fabric comprising yarns and interstices between the yarns, said interstices having an average width of greater than 100µm, at least one of the yarns being comprised of multiple fibers having voids between the fibers;
b) Providing a liquid polymer material having a viscosity of less than 3000 mPa/s;
c) Filling the voids with said polymer material while the interstices remain open.

A further step d) comprises the curing of said fabric after step c). It is also possible to treat the fabric to become hydrophobic after step d).

### Brief description of the drawings

Figure 1 depicts a cross-section through an untreated yam with multiple fibers.
Figure 2 depicts a cross-section through an untreated yam with multiple fibers after contact with a liquid.
Figure 3 depicts a fabric of the invention.
Figure 4 depicts a cross-section through a treated yam according to the invention.
Figure 5 depicts a cross-section through a treated yam according to the invention after contact with a liquid.
Figure 6 depicts an embodiment of the invention showing a barrier layer joined to the fabric.
Figure 6A depicts an embodiment of the invention in which the barrier layer is combined with a textile layer.
Figure 6B depicts an embodiment of the invention in which a fabric structure is formed which comprises a two layer laminate.
Figure 6C depicts an embodiment of the invention in which a fabric structure is formed which comprises a three layer laminate.
Figure 7 depicts a scanning electron microscope photomicrograph (SEM) of the cross-section of an untreated yam in a fabric.
Figure 8 depicts a SEM of the cross-section of same untreated yam of figure 7 in a larger scale.
Figure 9 depicts a SEM of the cross-section of a treated yam of the same fabric of figure 7 and 8.
Figure 10 depicts a SEM of the cross-section of the same treated yam of figure 9 in a larger scale.
Figure 11 depicts a SEM of the surface of the treated fabric of the figures 9 and 10.
Figure 12 depicts a SEM of the cross-section of a fabric laminate.
Figure 13 depicts a SEM of the cross-section of the fabric laminate of figure 12 on a larger scale.

### Detailed description of the invention

This invention describes a fabric 10 which reduced water absorption of the yarns 20 used in the fabric 10 as a result of improved water repellency of the yarns 20. In particular, this invention describes a fabric 10 which is treated to prevent the storage of any liquid in the open voids of the at least one yam 20 being comprised of multiple fibers and from which the fabric 10 is made. The invention especially prevents the capillary wetting of the at least one yam 20 used in the fabric 10.

Water absorption means the amount of water absorbed by the fabric 10 when immersed in water for a predetermined period of time. The ratio of the weight of water absorbed by the fabric 10 to the weight of the dry fabric is the water absorption rate.

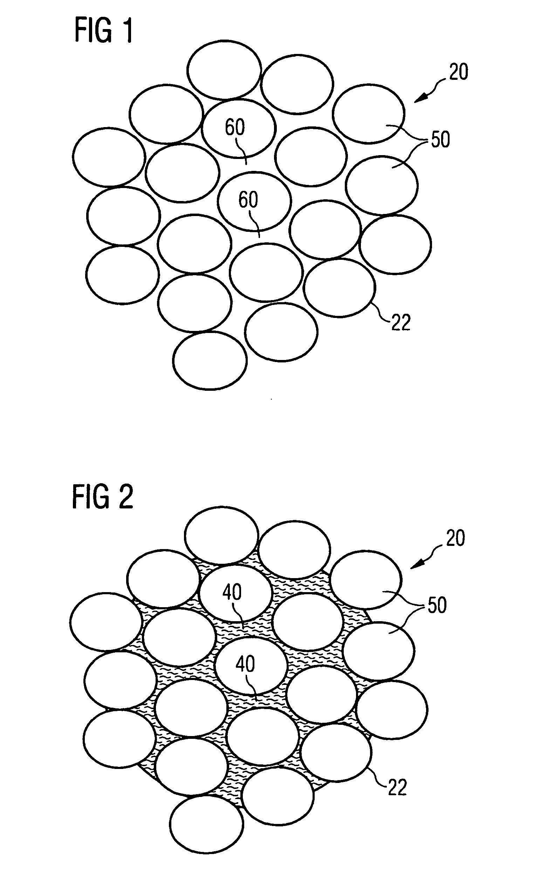

**Figure 1** shows in a schematic cross section view a typical yam for fabrics which in itself is a bundle of fibers or filaments 50.

By "fabric" is meant a material made from yarns. In particular the term "fabric" as used herein refers to a sheet-like structure (woven or non-woven) comprised of yarns with interstices between the yarns.
The term "yarn" as used herein refers to a continuous strand comprised of a multiplicity of fibers, filaments, or the like in a bundled form, such as may be suitable for knitting, weaving or otherwise used to form a fabric. Yam occurs as a number of filaments that are twisted together (spun yam) or a number of filaments that are laid together without twist (a zero-twist yam). Yam is comprised of a plurality of associated or inter-engaged fibers having voids defined there-between. The yam may also be comprised of one single monofilament.
The term "void" as used herein refers to the empty space/volume between the fibers or filaments of a yam. The void space can also be described as the capillary space between the fibers within a yam. The voids are usually filled with air. The average size of a void may be between 0 - 10µm, depending how tight the fibers/filament are arranged within the yam.
The term "fiber" as used herein refers to a long, pliable, cohesive, natural or man-made threadlike object, such as a monofilament, a staple, a filament, or the like. Fibers can be regarded as being in the form of units which can be formed by known techniques or the like.
The term "filament" as used herein refers to a fiber of indefinite length.
The term "laminate" as used herein refers to at least two individual layers, which are bonded via an adhesive or otherwise.

The term "fabric structure" as used herein refers to the fabric which is at least adjacent to at least one water vapor permeable layer. Said water vapor permeable layer may hang unbonded next to the fabric. In a particular embodiment the at least one water vapor permeable layer is joined to at least one side of the fabric. In one particular embodiment the fabric is adjacent to a laminate comprising a barrier layer as described herein. In another particular embodiment the fabric structure is a laminate formed of the fabric and at least one barrier layer as described herein.

The yam 20 in **Figure 1** consists of multiple fibers 50 with several voids 60 between the single fibers 50 of the yam 20. When the yam 20 comes in contact with a liquid like water, the liquid first rests on the outer surface 22 of the yam 20 and then penetrates between the fibers 50 and fills up the void volume of the yam 20.

The yam is selected from the group consisting of polyolefins, polyamides, polyester, regenerated cellulose, cellulose acetate, rayons, acetates, aramids, glass, modacrylics, cotton, wool, silk, linen, jute and mixtures thereof. The fibers of the yam comprise continuous multi filaments, staple fibers or combinations thereof. The fibers used to form the fabric are not texturized. In an embodiment of the invention the yam comprises filaments made of polyester. In another embodiment the yam comprises 50% polyester staple fiber and 50% regenerated cellulose staple fiber like Lyocell. The yam for use to form the fabric can be made using a number of prior art techniques. The linear density of the yarns used is preferably between 80dtex and 300dtex before the filling up or impregnation process.
The yam 20 for example comprises a polyester or polyamide which is non-texturized, but has a twist level of about 600 turns/m.
The fabric may also comprise yarns comprised of a single monofilament. Such yarns comprised of a single monofilament have no voids and therefore cannot be filled up. The fabric can comprises a mixture of yarns being comprised of multiple fibers and yarns comprised of a single monofilament.
In a particular embodiment all yarns of the fabric comprised of multiple fibers.

**Figure 2** shows a yam 20 with multiple fibers 50 wherein the void volume of the yam 20 is completely filled up with a liquid 40 like water. As result the yam 20 is heavier than before and the fabric 10 made of the yam 20 gains undesired weight. In many cases it is possible that the water absorption amounts to more than 100g/m². It is nearly impossible to remove the liquid in a fast way from the voids 60.

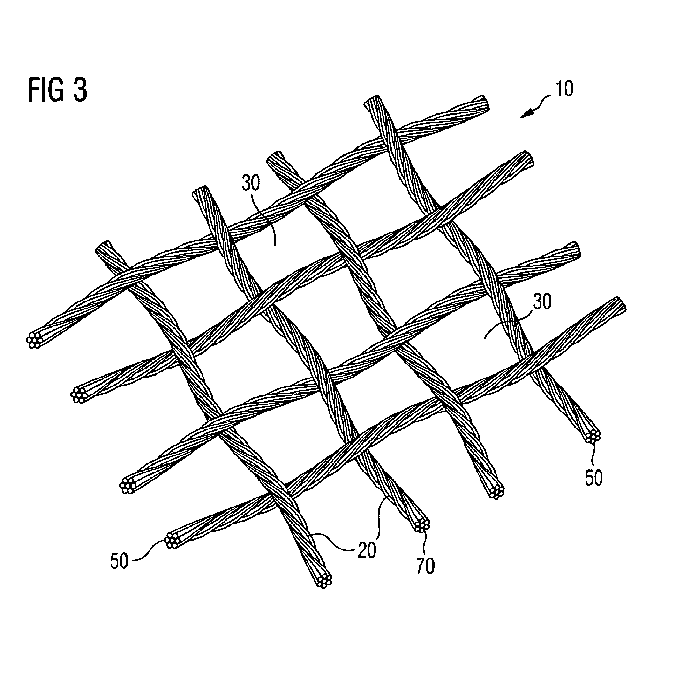

**Figure 3** shows a fabric 10 according to this invention. The fabric 10 consists of yarns 20 which form a woven with yarns in the warp direction and in the weft direction. In this embodiment all of the yarns 20 are in themselves are bundles of fibers or filaments 50 with interstices 30 between the yarns 20. The fabric 10 is constructed in such a way that even after the filling process the interstices 30 between the yarns 20 remain unfilled and therefore are able to continue contributing to the comfort of the wearer as moisture can be transported from the body to the outside through the interstices 30. These interstices 30 need to be larger than 100µm to ensure high water vapor permeability and air permeability. In one embodiment the interstices 30 ensure an air permeability of at least 300 l/m²/s. In a further embodiment the interstices 30 ensure an air permeability of at least 500 l/m²/s.

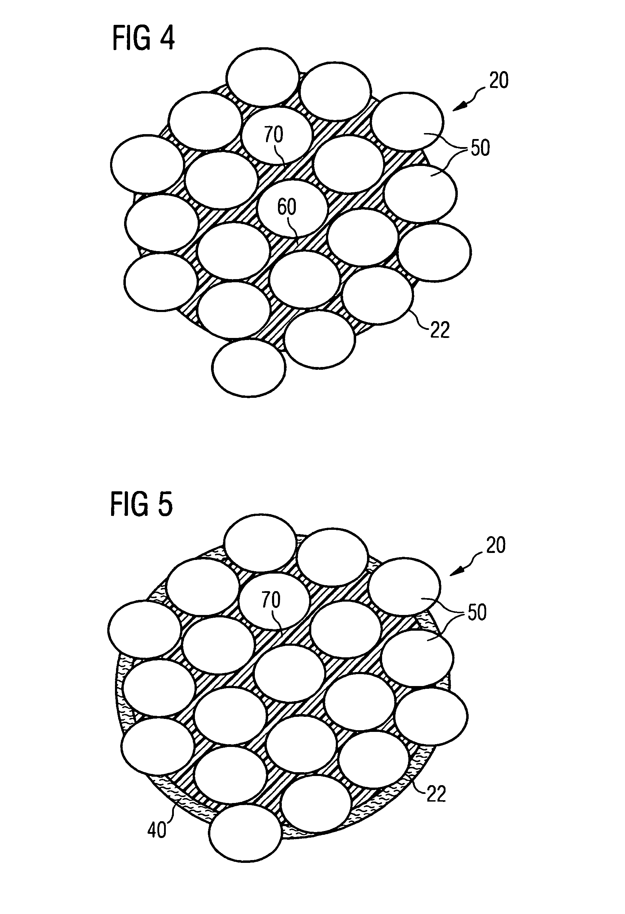

In this invention the yarns 20 are filled up / impregnated with a polymer material 70 that penetrates between the fibers or filaments 50 of each yam 20 and fills up the void volume in between (see figure 4). In one embodiment the voids 60 of the yam 20 are completely filled up with the polymer material 70. In a further embodiment the voids 60 are substantially filled up with the polymer material 70, thus some voids 60, especially in the centre of the yam 20, may remain unfilled. In a particular embodiment at least the fibers 50 within the outer surface 22 of the yam 20 are embedded in the polymer material 70. In this embodiment the surface 22 of the yam 20 is substantially free of the polymer material 70.
In another embodiment the polymer material 70 forms at least partially a thin outer skin around the outer surface 22 of the yam 20.

Due to the filling up of the voids 60 of the yarns liquid like water cannot penetrate between the fibers 50 or filament 50 of the yam. Therefore the water absorption of the fabric 10 decreases significantly.

The polymeric material 70 is comprised of at least one silicone. In another example the polymeric material 70 is comprised of at least one non-swelling polyurethane. In a further embodiment the polymer material 70 is comprised of amorphous perfluoropolymer like Teflon AF®.
The polymer material 70 prior to filling up the voids 60 exists as a liquid having a viscosity (starting viscosity) of less than 3000 mPa/s. In another embodiment the polymer material 70 prior to filling up the voids 60 exists as a liquid having a viscosity of less than 2000 mPa/s. In a further embodiment the polymer material 70 prior to filling up the voids 60 exists as a liquid having a viscosity of less than 1000 mPa/s. The viscosity of less than 3000 mPa/s, less than 2000 mPa/s, less than 1000 mPa/s for the polymer material 70 ensures that the polymeric material 70 is able to penetrate between the fibers or filaments 50 filling up the voids 60, at the same time leaving the interstices 30 free. The low viscosity of the polymeric material 70 may be reached inter alia using known solvents like Xylol or petrol. The solvents may be added to the polymeric material 70 in such amounts as are needed to obtain the desired viscosity.
In one embodiment silicones are used as polymer material 70. The silicones used can be of the RTV-Type, LSR-Type or mixtures thereof. These silicones consist of two parts which are mixed before use.
The curing process of the RTV (room temperature vulcanization) silicones starts at the point of mixing at room temperature, but it accelerates with increasing temperature. A good curing temperature is between 120°C and 180°C.
LSR (Liquid silicone rubber) silicones need a high temperature, that means between 160°C and 200°C for curing.
The curing time is dependent on the amount of silicone in the yarns, the line speed, the length of the heating area and the selected temperature of the heating area.

The polymer material 70, especially the silicones, may contain one or several additives. The additives used may be reflective agents, mildew-resistant agents, hand-altering agents, viscosity agents, rheology agents, flexibility agents, ultraviolet agents, filling agents, electrically conductive agents, thermally conductive agents, flame retardants and radiation reflectivity agents.
The flame retardants agents may be boron compounds, alumina trihydrate, antimony oxides with halogen containing compounds, magnesium hydroxide, and organic or inorganic compounds of phosphorous.

An uncoated fabric is used as the basis for applying the polymer material 70.

The fabric10 has a textile weight of 20 to 500 g/m². In one embodiment the fabric 10 has a weight of 75 to 350 g/m². In a further embodiment the uncoated weight of the fabric is about 100g/m².
The fabric 10 may a woven or a knit. It is made with a warp yam 14 and a weft yam 16 count of between 10 and 40 yarns/cm.
The amount of polymeric material 70 applied is about 35-55g/m², depending on the weight of the fabric 10. The remaining interstices 30 have an average diameter which is substantially unchanged from the starting fabric 10 because the polymeric material 70 is located only within the voids 60 between the fibers or filaments 50 of the yarns. In some embodiments it is possible that partially a thin skin layer of the polymer material may remain around the outer surface 22 the yarns 20 but this has a negligible influence on the diameter of the interstices 30.

The fabric 10 in **Figure 3** shows a woven fabric 12 made of yarns 20 consisting of multiple fibers 50. Between the woven yarns and crossing points of the yarns several interstices 30 are formed. These interstices 30 have an average width of greater than 100µm and ensure high water vapor permeability and air permeability of the inventive fabric 10. The cross-sections of the yarns 20 show that each yam 20 consists of multiple fibers or filaments 50. The voids 60 between the fibers 50 are filled up with a polymer material 70 (see also figure 4) to prevent liquid from penetrating into the void volume of the yarns 20. The polymer material may be comprised of at least one silicone.
The inventive fabric 10 is impregnated with a polymeric material 70 such that the prevailing amount of the polymeric material 70 fills up the void volume of the yarns 20. Therefore the textile character of the fabric 10 remains unchanged in comparison to the untreated fabric. Also the average width of the interstices 30 remains substantially unchanged and therefore the values for water vapor permeability (breathability) and air-permeability are still very high. On the other hand, the rate for water absorption decreases significantly.

The process for producing the impregnated inventive fabric will be described in the following: A liquid polymer material is provided as impregnation solution with a viscosity of less than 3000 mPa/s. In a particular embodiment the polymer material comprises a solvent to ensure the low viscosity. The impregnation solution is situated between two chrome rollers wherein only one roller is moving (application roller). The other upper roller stays immobile. The solution is measured onto the application roller by precision setting of the gap between the upper roller and the application roller below it. The gap between the rollers is about 50 to 150 µm depending on the thickness of the fabric therefore. The solution is 'wiped' off the application roller by the fabric as is passes around the application roller where it comes in contact with the impregnation solution which then penetrates into the yam structure of the fabric. Any excess solution will remain on the application roller, leaving the interstices between the yarns open and free of solution. Afterwards a curing process takes place in an oven at temperatures of between 120°C and 160°C for a time of approximately 2 min, in some embodiments for a time of 1 min.

As impregnation solution any polymer material with a viscosity of not higher than 3000 mPa/s may be used. The polymer material prior to coming in contact with the fabric exists as a liquid having a viscosity (starting viscosity) of less than 3000 mPa/s. In another embodiment the polymer material prior to coming in contact with the fabric exists as a liquid having a viscosity of less than 2000 mPa/s. In a further embodiment the polymer material prior to coming in contact with the fabric 10 exists as a liquid having a viscosity of less than 1000 mPa/s.

**Figure 4** shows the cross-section of a yam 20 according to one embodiment of the invention. The voids 60 between the fibers 50 are filled up with the polymer material 70. This results in a cross-section where the fibers 50 are completely embedded in the polymer material 70. Figure 4 shows one embodiment of the invention where the polymer material 70 is concentrated in the middle of the cross-section and the outer surface 22 of the yam 20 remains without polymer material 70. It is also possible that the outer surface 22 is covered at least partially with a thin skin of polymer material 70.

**Figure 5** shows the situation when a liquid 40 like water contacts the fabric 10 according to the invention. Because the voids 60 of the yam 20 of the fabric 10 are filled up with the polymer material 70, liquid can come in contact only with the outer surface 22 of the yam 20. The filled voids 60 of the yam 20 prevent the yam from absorbing the liquid 40.

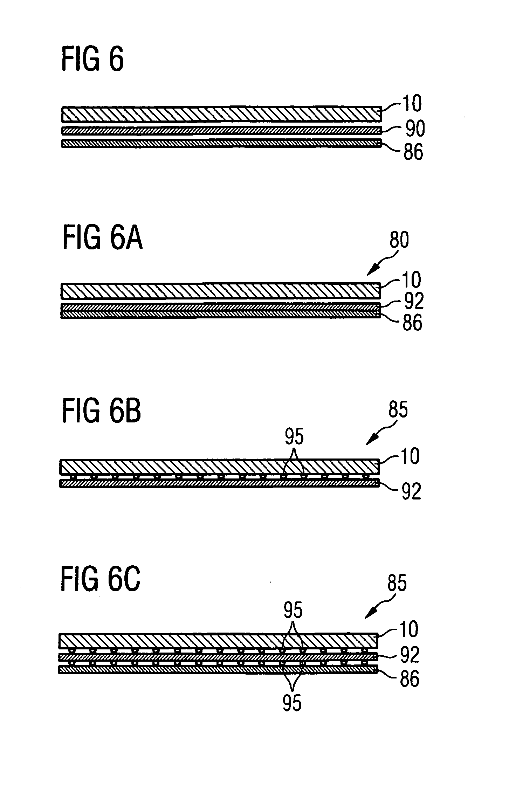

**Figure 6** shows the fabric 10 according to one embodiment of the invention in which at least one water vapor permeable layer 90 is adjacent to one side of said fabric 10 forming a fabric structure. It is possible to add a backer textile layer 86 to at least one side of the water vapor permeable layer 90. The backer textile layer 86 may form the innermost layer in clothing which is directed to the wearer. The backer textile layer 86 may be attached to at least one side of the layer 90 or may hang un-bonded next to the layer 90.
In one embodiment of the invention the water vapor permeable layer 90 may be a barrier layer. In a further embodiment of the invention the water vapor permeable layer 90 may be at least one textile layer. Said textile layer can also joined to one side of the fabric 10 by at least one seam or at least one adhesive. Preferably the innermost layer in a clothing may be formed by said textile layer and the outermost layer may formed by said inventive fabric 10. The function of the textile layer is mainly to soak up the sweat of the wearer and may be a so called push pull fabric.

The barrier layer may be a membrane, a film or a laminate comprising a polytetrafluoroethylene (PTFE), expanded PTFE, polyurethanes, or other suitable substrates.

The fabric, on the side opposite that on which forms the future outer side of clothing, can be adjacent to another layer to form a multi-layered composite. In one example the fabric is laminated to or coated with another layer. For example, one side of the fabric may be attached or adhered to a barrier layer like a water impermeable, water vapor permeable film or membrane, such as a monolithic breathable polyurethane or polyester polyether film or a porous especially microporous, polyethylene or polypropylene, or polyurethane. One embodiment of a membrane or film is composed of an expanded polytetrafluoroethylene (ePTFE) membrane disclosed in U.S. 3,953,566, which has a porous microstructure characterized by nodes interconnected by fibrils. The membrane is resistant to passage of liquid water therethrough but is water vapor permeable. The membrane may have a weight between 1 and 100 g/m².
In a membrane or film containing ePTFE, the ePTFE can be impregnated with a hydrophobic impregnant. The ePTFE may have on it a continuous layer of a film or coating of a water resistant, water vapor permeable material such as water vapor permeable polyurethane of the type disclosed in U.S. 4,194,041. The continuous water vapor permeable polymer layer is a hydrophilic polymer in the sense that it transports water molecules and will be referred to herein as a hydrophilic polymer. The hydrophilic layer selectively transports water by diffusion, but does not support pressure driven liquid or airflow. Therefore, moisture, i.e. water vapor, is transported but the continuous layer of the polymer precludes the passage of liquid water and such things as air-borne particles, micro organisms, oils or other contaminants.
The water vapor permeable barrier layer may in one embodiment be directly attached to one side of the fabric 10. The direct attachment of the barrier layer to the fabric 10 may be performed in using a discontinuous adhesive layer. In further embodiments the attachment may be performed in using at least one seam like adhesive seams, welded seams or stitched seams.

The fabric 10 according to the invention can be combined with the water vapor permeable barrier layer to provide air impermeable characteristics and/or liquid impermeable characteristics.
The barrier layer is at least air impermeable in one embodiment of the invention. The term "air impermeable" means that the barrier layer or the fabric 10 in combination with the barrier layer has an air-permeability of less than 25 l/m², in some embodiments of less than 5 l/m².

In a further embodiment the barrier layer is liquid impermeable. The term "liquid impermeable" means the barrier layer, or the fabric 10 in combination with the barrier layer having a water entry pressure of >0.13bar.
In another embodiment the treated fabric 10 is joined to an air impermeable, liquid impermeable and water vapor permeable barrier layer.

**Figure 6A** shows an embodiment of the invention in which a fabric structure 80 is formed which comprises a fabric layer 10 and a water vapor permeable layer 90. The water vapor permeable layer 90 is formed of a barrier layer 92 and at least one backer textile layer 86. The backer textile layer 86 may be either woven, non-woven or knitted and may be made from a variety of materials such as polyester, polyamide, polyolefins and the like. The backer textile layer 86 is attached to one side of the barrier layer 92.

In one embodiment of the invention the barrier layer 92 and the backer textile layer 86 form a multi-layer laminate, that means the individual layers making up the laminate may be bonded via an adhesive or may be otherwise joined.
In a further embodiment the barrier layer 92 may be provided in addition to the backer textile layer 86 with another textile layer adhesively bonded to the barrier layer 92 on a side of the barrier layer 92 opposite to the backer textile layer 86. This three layer laminate may also hang unbonded next to the fabric layer 10 or may be adhesively attached to the fabric 10.

**Figure 6B** shows an embodiment of the invention in which a fabric structure 80 is formed of a two layer laminate 85. The laminate 85 comprises a water vapor permeable barrier layer 92 and a woven impregnated fabric layer 10 according to the invention. The bond between the barrier layer 92 and the fabric layer 10 is via a discontinuous adhesive 95 for example as adhesive dots, as adhesive net or as adhesive powder.
In another example of the invention the laminate 85 is formed using an untreated fabric layer and afterwards the laminate is impregnated with the polymeric material according to the invention. Thereby the voids of the yarns in the fabric are filled up with a polymer material but the interstices of the fabric layer 10 remain open and the barrier layer 92 remains untreated.

**Figure 6C** shows the laminate 85 of Figure 6B wherein on the other side of the barrier layer 92 a backer textile layer 86 is placed. In this embodiment the backer textile layer 86 is bonded to the barrier layer 92 via a discontinuous adhesive 95 forming a three layer laminate. The backer textile layer 86 may be bonded to the barrier layer 9 before or after the impregnation process according to the invention.

The clothing can be in the form of pants, jackets, hat or gloves or the like.
To prepare clothing or a clothing part, the treated fabric 10 and the water vapor permeable layer 90 can be separate parts or the water vapor permeable barrier layer 90 can be attached to the treated fabric 10.

### Example 1

A fabric made of 100% polyester (PES) yam is used. The fabric is a woven textile made of a filament yam with a twist level of about 600 turns/m and dtex100f36x2. The yam is non-texturized. The interstices between the yarns have a diameter of about 180µm-230µm in the warp and weft direction. Such a woven textile is available from the company SR-Webatex GmbH, Germany.

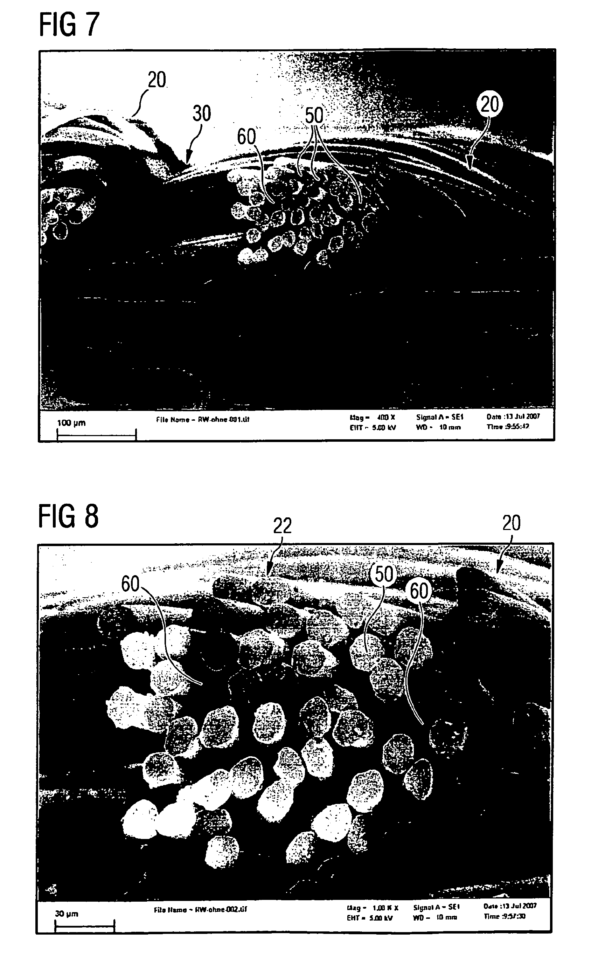

Figure 7 and 8 show an SEM of the cross section of the yam of example 1 before the impregnation in different magnifications.
**Figure 7** shows an SEM of several untreated yarns 20 in the form of fiber bundles in a woven structure with interstices 30 between the yarns 20. Each yam 20 comprises multiple fibers 50 in the form of filaments.
**Figure 8** shows an SEM of the cross section of the untreated yam 20 of figure 7 comprised of multiple fibers 50 on a larger scale. Between the fibers 50 of the yam 20 and within the cross-section of the yam 20 there are several voids 60 of different sizes.

The fabric 10 was impregnated with a silicone solution using the process described above. The silicone solution is SilGel 612 of Wacker Chemie AG, Germany and has a viscosity of 1000mPa/s. The thickness of the silicone solution on the application roller is around 70 µm (= gap between the rollers). The curing time of the fabric 10 after the treatment was around 1 min at a temperature of 160°C.

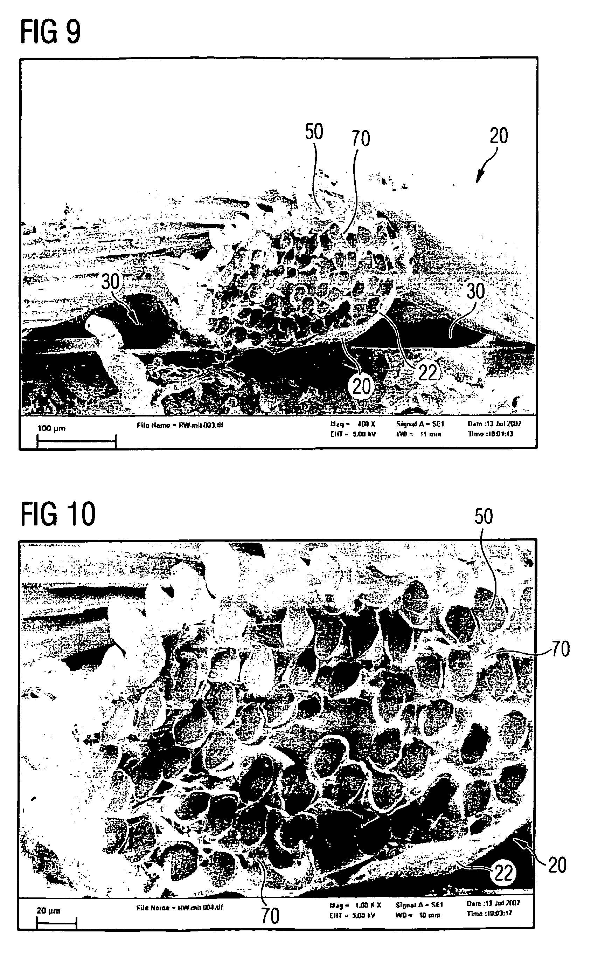

**Figure 9** shows the treated yarns 20 of the woven textile. The outer surface of the yam 22 is partially covered with a very thin skin of silicone material. The cross-section of the yam 20 shows that the voids 60 between the fibers 50 are filled up with the silicone material acting as polymer material 70. The interstices 30 between the yarns 20 are open and not filled with silicone material.

**Figure 10** shows the treated yam of figure 10 in a higher magnification. The voids 60 between the fibers 50 are filled with the silicone material (polymer material) 70 and substantially no open void volume is left. All fibers 50 are embedded in the polymer material 70. Therefore no other material like a liquid can be absorbed inside the yam 20 between the fibers 50.

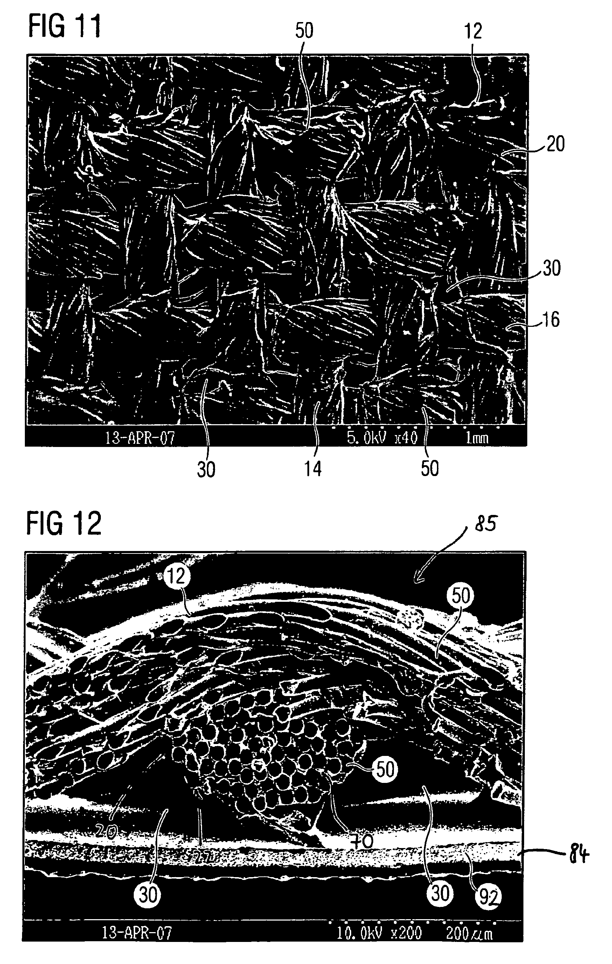

**Figure 11** shows a picture of the surface of the treated impregnated woven fabric 12 according to this example. The warp yarns 14 and weft yarns 16 form the woven fabric 12 with interstices 30 between the yarns 14, 16. The interstices 30 of the fabric 12 are open and not closed by the silicone material. Therefore, the fabric is still water-vapor permeable and air-permeable. Furthermore, the fiber bundle structure of each yam 20 is visible. Therefore only the fibers 50 within the outer surface 22 are embedded in the silicone material 70 and the outer surface 22 is at least partially free of polymer material 70.

Table 1 shows the technical features of the fabric 10 before and after the treatment:

**Table 1**

| | Weight g/m² | Breathability (MVTR) in g/m²/24h (according DIN EN ISO 15496) | Air-permeability in l/m²/sec (according DIN EN ISO 9237) |
|---|---|---|---|
| Fabric untreated | ca. 103 | ca. 36000 | >2800 |
| Fabric treated | 133-143 | 21000-29000 | 1900->2800 |

The amount of silicone as polymer material 70 applied is about 30-40g/m². The water vapor permeability (breathability) for the treated fabric 10 is reduced but still high. The reason for the reduction is that the voids 60 of the yam 20 are not longer available for a water vapor transmission, because the voids 60 are closed by the polymer material 70. The water vapor transmission takes place only through the interstices 30 between the yarns 20. The air permeability for the untreated and the treated fabric 10 is the same, because the width of the interstices 30 of the treated fabric is the same as for the untreated fabric material.

Table 2 demonstrates the water absorption rates of the untreated and treated fabric according to two methods:

**Table 2**

| | Water absorption **Test I** in % (according to DIN EN 29865 | Water absorption **Test II** in % (according to DIN EN 29865) |
|---|---|---|
| Fabric untreated | 33-38 | 6-8 |
| Fabric treated | 7-10 | 0-0,5 |
| Fabric treated and after 10x domestic washing at 60°C* * (according to DIN EN 6330,2A) | 10-16 | 0,5-2 |

The main difference between Test I and Test II is that in Test II the fabric has been shaken after the Bundesmann test to remove liquid like liquid droplets which stuck on the surface of the fabric. With regard to Test I the treated fabric shows a decrease in the water absorption to less than 10%. Even after several domestic washing circles the water absorption is still below 20%. The Test II demonstrates that the treated fabric has substantially no water absorb.

The fabric according to the invention was tested with the "Sliding Test". The results are reported in table 3:

Table 3 shows the results of the "Sliding Test"

**Table 3**

| sample | Fabric of example 1, untreated | Fabric of example 1, treated | Comparison fabric coated with silicone according to EP 1 264 036 |
|---|---|---|---|
| 1 | 17° | 19° | 56° |
| 2 | 18° | 21° | 55° |
| 3 | 16° | 20° | 59° |

The "Sliding Test" was developed to demonstrate the improved textile hand (characteristic) of the fabric or the fabric layer of a laminate according to the invention.

The fabric for the comparison is made according the EP 1 264 036. Such a fabric comprises a woven textile made of yarns with interstices between the yarns. The yarns are substantially entirely coated with a silicone coating, but the silicone coating does not completely fill the interstices between the yarns. The surface of the yarns is completely coated with the silicone.

The properties of the untreated fabric and the treated fabric of example 1 with regard to the textile hand/characteristic are after the "Sliding Test" substantially the same. The textile feeling of the inventive fabric therefore is maintained also after the impregnation with the silicone material. As comparison the fabric which yarns are completely covered with silicone material shows an approximately triple higher number for the test what shows that the textile characteristic is very bad.

### Example 2

An untreated fabric as described in example 1 was used. The fabric was laminated to a waterproof and water-vapor permeable barrier layer using a standard lamination process. A porous membrane made of ePTFE was used as barrier layer 90. The membrane was manufactured according to U.S. Patents 3,953,566 and 4,187,390 and was coated with a continuous layer of water vapor permeable hydrophilic polyurethane as described in U.S. 4,194,041. The resulting membrane will hereinafter be referred as coated ePTFE membrane. To create a two layer laminate the fabric of example 1 was laminated to the ePTFE side of the coated ePTFE membrane using a dot pattern of polyurethane adhesive as described in U.S. 4, 532,316. The resultant laminate is a water impermeable, water vapor permeable laminate.

The laminate was impregnated with a silicone solution SilGel 612 of Wacker Chemie AG having a viscosity of 1000 mPa/s. The same process was used as described in example 1. In the impregnation process the textile side of the laminate was directed to the application roller to meet the silicone solution for the impregnation.

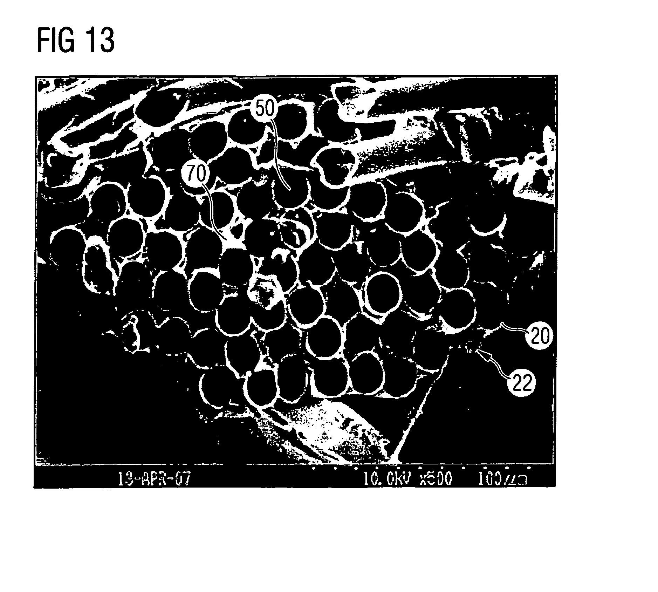

Figures 12 and 13 show the SEM's of the cross section of such a treated laminate in different magnifications.

**Figure 12** shows the SEM of a cross section through the two layer laminate 85 according to example 2 impregnated with the silicone material 70 according to the invention. The woven fabric 12 forms the first layer of the laminate 85. The coated ePTFE membrane 84 forms the second layer of the laminate 85. Both layers are bonded together using an adhesive applied in a discontinuous form. The surface 22 of the yarns 20 is substantially without any silicone material, but the voids between the filaments 50 are filled up with the silicone material 70. The interstices 30 between the yarns 20 and the surface of the coated ePTFE membrane 84 are free of silicone material 70 and therefore the laminate 85 is still water-vapor permeable also after the impregnation process.

**Figure 13** shows a SEM of the treated yarn 20 of figure 12 in a higher magnification. The voids between the fibers 50 are filled with the silicone material 70 and no open void volume is left. Therefore no other material like a liquid can be absorbed inside the yam 20 and between the fibers 50.

Table 4 shows the technical feature of the laminate before and after the treatment:

**Table 4**

| | weight g/m² | Breathability (MVTR) in g/m²/24h (according DIN EN ISO 15496) | Air-permeability in l/m²/sec (according DIN EN ISO 9237) |
|---|---|---|---|
| laminate untreated | ca. 145 | 14500-15000 | <5 |
| laminate treated | 175-185 | 9000-14000 | <5 |

The amount of silicone applied to the laminate is about 30-40g/m². The water vapor permeability (breathability) for the treated laminate is still very high and close to the range for the untreated laminate. The coated ePTFE membrane itself does not show an air permeability, therefore the laminate in the untreated and treated state is not air-permeable as well.

Table 5 demonstrates the water absorption rates of the untreated and treated laminate according to two methods:

**Table 5**

| | Water absorption **Test I** in % (according to DIN EN 29865 | Water absorption **Test II** in % (according to DIN EN 29865) |
|---|---|---|
| Laminate untreated | 35-40 | 28-35 |
| Laminate treated | 11-15 | 2-5 |
| Laminate treated and after 10x domestic washing at 60°C* * (according to DIN EN 6330,2A) | 16-22 | 7-12 |

The treated laminate according to the invention and according to Test I demonstrates a water absorption rate less than 20 % and according to Test II shows a quite better water absorption rate less than 10%. Also after 10 domestic washing cycles the values for the water absorption are still below 20 %.

### Test procedures

### Air permeability:

To measure the air permeability of a fabric (textile), a test machine which can measure the air flow through the fabric is used. The samples are placed between two rings which results in a test area of 100 cm². Air is sucked through the sample at a constant pressure of 100 Pa. Hereby the amount of air coming through the sample is measure and calculated in l/m²/s. The test method is described in EN ISO 9237.

### Water vapor transmission rate:

### MVTR test method for the fabric:

The moisture vapor transmission rate (MVTR) of the fabric according to the invention was measured in accordance with EN ISO 15496 in g/m²/24h. In order to be considered as water vapor permeable, the fabric should generally have a water vapor permeability of at least 1000, preferably greater than 1500 and more preferably greater than 3000g/m²/24h, and can be over 15,000 g/m²/24h.

### RET test method for the barrier layer:

The water vapor transmission resistance (Ret) is a specific material property of sheetlike structures or composites which determines the latent evaporation heat flux through a given area under a constant partial pressure gradient. A barrier layer according to the invention is water vapor permeable if it has a water vapor transmission resistance Ret of below 150 (m²×Pa)/W. The barrier layer preferably has a Ret of below 20 (m²×Pa)/W. The water vapor permeability is measured by the Hohenstein MDM dry method, which is described in standard test specification No. BPI 1.4 (1987) of the Bekleidungsphysiologisches Institut (Apparel Physiology Institute] e.V. Hohenstein.

### Width of the interstices:

The treated fabric comprises interstices between the yarns, which give rise to an air permeability of more than 300 l/m²/s, of more than 500 l/m²/s and of more than 1000l/m²/s. These interstices have a width of at least 100µm. The width means the smallest distance between two yarns in the fabric. Therefore the smallest possible interstice according to the invention has dimensions of 100x100µm. In one embodiment the interstices have a width of 100-1000µm.

To measure the width of the interstices, a microscope (e.g. a Zeiss-microscope ) is used. The samples are placed under the microscope and the width is measured with a preferably 50x magnification in combination with an electronic measuring program for distances. Any further useful magnification can be used.

### Water impermeability:

Measurement of the water impermeability is carried out in accordance with International Standard ISO 811. In one embodiment the barrier layer is resistant to water pressure up to 0.13 bar.

### Water absorption:

One method of determining the **water absorption** properties of textile structures is using a rain test according to the Bundesmann test (DIN EN 29865) (1991). The rain unit creates rain defined by water volume, drop size and distance of rain unit to test samples. The test runs for 10 minutes.

The **water absorption (Test I)** of the fabric and laminate are measured according to the following method:
1. Determination of the weight of the sample (fabric/laminate)
2. Performing the Bundesmann rain test for 10 minutes
3. Spinning of the sample for 15s
4. Determination of the weight of the sample
5. Calculation of the weight gain in % related to the sample before the Bundesmann rain test.

In a further embodiment of the **water absorption test (Test II),** the samples are treated as follows:
1. Determination of the weight of the sample (fabric/laminate)
2. Performing the Bundesmann rain test for 10 minutes
3. Spinning of the sample for 15s
4. Shaking of the sample 5 times in a vertical direction
5. Drying of the sample for 5min at room temperature (20°C/65% rel.hum.)
6. Determination of the weight of the sample
7. Calculation of the weight gain in % related to the sample before the Bundesmann rain test.

The measurement of the water absorption according to Test I and Test II was carried out on untreated fabric and laminate samples, on treated fabric and laminate samples according to the invention and on treated fabrics and laminates according to the invention and after 10 domestic washing cycles at 60°C.

### Domestic washing:

The washing was carried out by a domestic washing cycle at 60°C in accordance with International Standard ISO 6330/2A (1984).

### Slide Test:

The test shows in principle the resistance of the surface of a material against a different material. In the field of fabrics and textiles this resistance is called "textile hand" or in other words the "stickiness of a textile". That means, the more sticky a textile feels the less comparable it is with the normal typical textile hand.

The test apparatus comprises a ground plate (25x50cm) which is movable between 0° - 90° and has a first edge and a second edge opposite to the first edge, and a metal plate (10x10cm) with a weight of 100g. If the ground plate is moved the first edge goes down and the second edge goes up.
The slide test is carried out according to the following steps:
1. Fixing a sample with the dimensions 25x50cm on the surface of the ground plate. In case the sample is a laminate the fabric side needs to be the outermost surface.
2. Drawing two lines across the surface of the sample, the first line at a distance of 5cm from the fist edge of the plate and the sample; the second line at a distance of 35cm from the first edge of the plate and the sample.
3. Putting the metal plate on the surface of the sample in the area of the second edge of the ground plate.
4. Moving the ground plate until the metal plate starts to slide along the surface of the sample and passes the two lines within around 5s.
5. Determining the gradient of the plate.
6. Repeating the test 3 times

The gradient of the plate is the measure (weight) of the resistance of the sample. A high gradient shows a high resistance of the sample against the metal plate. The textile hand of such a sample is found to be poor. A low gradient shows a low resistance of the sample against the metal plate and here the textile hand is found to be good.

### Viscosity of the polymer material:

The viscosity of the polymer material can measure with a rotation measure apparatus (Viscosimeter), for example by the company Rheotec or Brookfield.

Without intending to limit the scope of the present invention, the foregoing illustrates how the present invention may be made and used.
While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

1. A fabric (10) comprising:
a. yarns (20) and interstices (30) between the yarns;
b. the interstices (30) between the yarns having an average width of greater than 100µm;
c. at least one yam (20) being comprised of multiple fibers (50);
d. the at least one yam (20) having voids (60) between the fibers (50);
e. wherein the voids (60) are filled up with a polymer material (70).

2. The fabric (10) of claim 1, wherein the interstices (30) have an average width of between 150µm and 250µm.

3. The fabric (10) of claim 1, wherein the polymer material (70) is selected from the group consisting of silicones, non-swelling polyurethane, amorphous perfluoropolymer and mixtures thereof.

4. The fabric (10) of claim 1, wherein the polymer material (70) is comprised of at least one silicone (75).

5. The fabric (10) according to any preceding claim, wherein the polymer material (70) contains one or several additives.

6. The fabric (10) of claim 5, wherein the additives are selected from the group consisting of reflective agents, mildew resistant agents, hand altering agents, viscosity agents, rheology agents, flexibility agents, ultraviolet absorbers, filling agents, electrically conductive agents, thermally conductive agents, radiation adsorptive agents, flame retardants and radiation reflectivity agents.

7. The fabric (10) of claim 6, wherein the flame retardants are boron compounds, alumina trihydrate, antimony oxides with halogen containing compounds, magnesium hydroxide, and organic or inorganic compounds of phosphorous.

8. The fabric (10) according to any preceding claim, wherein the voids (60) are completely filled up with the polymer material (70).

9. The fabric (10) according to any preceding claim, wherein the at least one yam (20) has an outer surface (22) and at least the fibers (50) within the outer surface (22) are embedded in the polymer material (70).

10. The fabric (10) of claim 9, wherein the outer surface (22) is at least partially free of polymer material (70).

11. The fabric (10) according to any preceding claim, having a water absorption rate of less than 50%.

12. The fabric (10) according to any preceding claim, having a water absorption rate of less than 20%.

13. The fabric (10) according to any preceding claim, having a water absorption rate of less than 10%.

14. The fabric (10) of claim 1 and 2, wherein the interstices (30) lead to an air permeability of the fabric of more than 300 1/m²/s.

15. The fabric (10) according to any preceding claim, having a chemical run-off rate greater than 90%.

16. The fabric (10) according to any preceding claim, wherein the fibers (50) comprise continuous multi-filaments, staple fibers or combinations thereof.

17. The fabric (10) according to any preceding claim, wherein the fabric (10) is in the form of a knit or a woven fabric.

18. The fabric (10) according to any preceding claim, wherein the yarns (20) being comprised of multiple fibers (50).

19. The fabric (10) according to any preceding claim, wherein the at least one yam (20) is selected from the group consisting of polyolefins, polyamides, polyester, regenerated cellulose, cellulose acetate, rayons, acetates, acrylics, aramids, glass, modacrylics , cotton, wool, silk, linen, jute and mixtures thereof.

20. The fabric (10) according to any preceding claim, wherein the at least one yam (20) comprises filaments made of polyester.

21. The fabric (10) according to any preceding claim, wherein the fabric (10) has a weight of 20 - 500g/m².

22. The fabric (10) according to any preceding claim, wherein the fabric (10) has a weight of 75 - 350g/m².

23. The fabric (10) according to any preceding claim, wherein at least one water vapor permeable layer (90) is adjacent to one side of the fabric (10).

24. The fabric (10) of claim 23, wherein the water vapor permeable layer (90) comprises a textile layer.

25. The fabric (10) of claim 23, wherein the water vapor permeable layer (90) comprises at least one water-vapor permeable barrier layer (92).

26. The fabric (10) of claim 25, wherein the barrier layer (92) is gas impermeable.

27. The fabric (10) of claims 25 to 26, wherein the barrier layer (92) is air impermeable.

28. The fabric (10) of claims 25 to 27, wherein the barrier layer (92) is liquid impermeable.

29. The fabric (10) of claim 1 and 25, wherein an air impermeable, liquid impermeable and water-vapor permeable barrier layer (92) is joined to one side of the fabric (10).

30. The fabric (10) of the claims 27 and 29, wherein the barrier layer (92) is air impermeable having an air-permeability of less than 25 l/m².

31. The fabric (10) of the claims 27 and 29, wherein the barrier layer (92) is air impermeable having an air-permeability of less than 5 l/m².

32. The fabric (10) of the claims 28 and 29, wherein the barrier layer (92) is liquid impermeable having a water entry pressure of 0.13 bar.

33. The fabric (10) of the claims 25 to 32, wherein the barrier layer (92) is a membrane.

34. The fabric (10) of the claims 25 to 33, wherein the barrier layer (92) is attached to one side of the fabric (10) using a discontinuous adhesive layer.

35. The fabric (10) of the claims 25 to 33, wherein the barrier layer (92) is attached by at least one seam to one side of the fabric (10).

36. The fabric (10) of claims 25 and 33; wherein the barrier layer (92) comprises a porous membrane made of expanded tetrafluoroethylene (ePTFE).

37. The fabric (10) of claim 1, wherein the polymer material (70) prior to filling up the voids exists as a liquid having a viscosity of less than 3000 mPa/sec.

38. The fabric (10) of claim 1, wherein the polymer material (70) prior to filling up the voids (60) exists as a liquid having a viscosity of less than 2000 mPa/sec.

39. The fabric (10) of claim 1, wherein the polymer material (70) prior to filling up the voids (60) exists as a liquid having a viscosity of less than 1000 mPa/sec.

40. Clothing comprising a fabric (10) according to claim 1.

41. A fabric structure (80) comprising at least two layers:
a. the first layer comprising a fabric (10) comprising:
i. yarns (20) and interstices (30) between the yarns;
ii. the interstices (30) between the yarns (20) having an average width of greater than 100µm;
iii. at least one yam (20) being comprised of multiple fibers (50) and having voids (60) between the fibers (50);
b. and the second layer comprising a water vapor permeable barrier layer (92) joined to at least one side of the first layer,
c. wherein the voids (60) are filled up with a polymer material (70).

42. The fabric structure (80) of claim 41, wherein the first layer and the second layer are attached together by at least one adhesive.

43. The fabric structure (80) of claim 41 to 42, wherein the barrier layer (92) is liquid impermeable.

44. The fabric structure (80) of claims 41 to 43, wherein the barrier layer (92) is gas impermeable.

45. The fabric structure (80) of claims 41 to 44, wherein the barrier layer (92) is air impermeable.

46. The fabric structure (80) of claims 41 to 45, wherein the barrier layer (92) comprises a porous membrane made of expanded tetrafluoroethylene (ePTFE).

47. The fabric structure (80) of claims 41 to 46, wherein the polymer material (70) is selected from the group consisting of silicones, non-swelling polyurethane, amorphous perfluoropolymer and mixtures thereof.

48. The fabric structure (80) of claim 41, wherein the polymer material (70) comprises at least one silicone.

49. The fabric structure (80) of claim 41, wherein the interstices (30) have an average width of between 150µm and 250µm.

50. The fabric structure (80) of claims 41 to 49, having a water absorption rate of less than 50%.

51. The fabric structure (80) of claims 41 to 50, having a water absorption rate of less than 20%.

52. Method for minimizing the water absorption rate of a fabric (10), comprising the following steps:
a. providing a fabric comprising yarns (20) and interstices (30) between the yarns (20), said interstices (30) having an average width of greater than 100µm, at least one of said yarns being comprised of multiple fibers (50) and having voids (60) between the fibers (50),
b. providing a liquid polymer material (70) having a viscosity of less than 3000 mPa/sec,
c. filling the voids (60) with said polymer material (70) while the interstices (30) remain open.

53. Method according to claim 52, comprising a further step d. of curing the fabric (10) after step c.

54. Method according to claim 52, wherein the liquid polymer material (70) has a viscosity of less than 2000 mPa/sec.

55. Method according to claim 52, wherein the liquid polymer material (70) has a viscosity of less than 1000 mPa/sec.

## Patentansprüche

1. Textiles Flächengebilde (10), aufweisend:
a. Garne (20) und Zwischenräume (30) zwischen den Garnen;
b. wobei die Zwischenräume (30) zwischen den Garnen eine Durchschnittsweite von größer als 100 µm haben;
c. wobei wenigstens ein Garn (20) mehrere Fasern (50) aufweist;
d. wobei der wenigstens eine Garn (20) Lücken (60) zwischen den Fasern (50) aufweist;
e. wobei die Lücken (60) mit einem Polymermaterial (70) gefüllt sind.

2. Textiles Flächengebilde (10) nach Anspruch 1, wobei die Zwischenräume (30) eine Durchschnittsweite zwischen 150 µm und 250 µm haben.

3. Textiles Flächengebilde (10) nach Anspruch 1, wobei das Polymermaterial (70) aus der Gruppe bestehend aus Silikonen, nicht-schwellendem Polyurethan, amorphen Perfluorpolymer und Mischungen daraus ausgewählt ist.

4. Textiles Flächengebilde (10) nach Anspruch 1, wobei das Polymermaterial (70) wenigstens ein Silikon (75) aufweist.

5. Textiles Flächengebilde (10) nach einem der vorhergehenden Ansprüche, wobei das Polymermaterial (70) eines oder mehrere Additive enthält.

6. Textiles Flächengebilde (10) nach Anspruch 5, wobei die Additive ausgewählt sind aus der Gruppe bestehend aus reflektiven Stoffen, schimmelresistenten Stoffen, trageverändernden Stoffen, Viskositätsstoffen, Rheologiestoffen, Flexibilitätsstoffen, Ultraviolettabsorbern, Füllstoffen, elektrisch leitenden Stoffen, thermisch leitenden Stoffen, strahlungsabsorptiven Stoffen, flammbeständigen Stoffen und Strahlungsreflektivitätsstoffen.

7. Textiles Flächengebilde (10) nach Anspruch 6, wobei die flammbeständigen Stoffe Bore-Verbindungen, Aluminiumtrihydrat, Antimonoxide mit Halogen enthaltenden Verbindungen, Magnesiumhydroxide, und organische oder inorganische Verbindungen von Phosphor sind.

8. Textiles Flächengebilde (10) nach einem vorhergehenden Anspruch, wobei die Lücken (60) vollständig mit dem Polymermaterial (70) gefüllt sind.

9. Textiles Flächengebilde (10) nach einem vorhergehenden Anspruch, wobei der wenigstens eine Garn (20) eine äußere Oberfläche (22) aufweist und wobei wenigstens die Fasern (50) innerhalb der äußeren Oberfläche (22) in das Polymermaterial (70) eingebettet sind.

10. Textiles Flächengebilde (10) nach Anspruch 9, wobei die äußere Oberfläche (22) wenigstens teilweise frei von Polymermaterial (70) ist.

11. Textiles Flächengebilde (10) nach einem vorhergehenden Anspruch, mit einer Wasserabsorptionsrate von weniger als 50%.

12. Textiles Flächengebilde (10) nach einem vorhergehenden Anspruch, mit einer Wasserabsorptionsrate von weniger als 20%.

13. Textiles Flächengebilde (10) nach einem vorhergehenden Anspruch mit einer Wasserabsorptionsrate von weniger als 10%.

14. Textiles Flächengebilde (10) nach Anspruch 1 und 2, wobei die Zwischenräume (30) zu einer Luftdurchlässigkeit des textilen Flächengebildes von mehr als 300 l/m²/s führen.

15. Textiles Flächengebilde (10) nach einem vorhergehenden Anspruch, mit einer chemischen Abflussrate größer als 90%.

16. Textiles Flächengebilde (10) nach einem vorhergehenden Anspruch wobei die Fasern (50) kontinuierliche Multi-Filamente, Stapelfasern oder Kombinationen hieraus aufweisen.

17. Textiles Flächengebilde (10) nach einem vorhergehenden Anspruch, wobei das textile Flächengebilde (10) in der Form von Strickware oder eines gewebten textilen Flächengebildes ist.

18. Textiles Flächengebilde (10) nach einem vorhergehenden Anspruch, wobei die Garne (20) mehrere Fasern (50) aufweisen.

19. Textiles Flächengebilde (10) nach einem vorhergehenden Anspruch, wobei der wenigstens eine Garn (20) ausgewählt ist aus der Gruppe bestehend aus Polyolefinen, Polyamiden, Polyester, regenerierte Zellulose, Zelluloseacetaten, Viskose, Acetaten, Acrylen, Aramiden, Glas, Modacrylen, Baumwolle, Wolle, Seide, Leinen, Jute und Mischungen daraus.

20. Textiles Flächengebilde (10) nach einem vorhergehenden Anspruch, wobei der wenigstens eine Garn (20) Filamente aus Polyester aufweist.

21. Textiles Flächengebilde (10) nach einem vorhergehenden Anspruch, wobei das textile Flächengebilde (10) ein Gewicht von 20-500 g/m² aufweist.

22. Textiles Flächengebilde (10) nach einem vorhergehenden Anspruch, wobei das textile Flächengebilde (10) ein Gewicht von 75-350 g/m² aufweist.

23. Textiles Flächengebilde (10) nach einem vorhergehenden Anspruch, wobei wenigstens eine wasserdampfdurchlässige Schicht (90) benachbart zu einer Seite des textilen Flächengebildes (10) angeordnet ist.

24. Textiles Flächengebilde (10) nach Anspruch 23, wobei die wasserdampfdurchlässige Schicht (90) eine textile Schicht aufweist.

25. Textiles Flächengebilde (10) nach Anspruch 23, wobei die wasserdampfdurchlässige Schicht (90) wenigstens eine wasserdampfdurchlässige Barriereschicht (92) aufweist.

26. Textiles Flächengebilde (10) nach Anspruch 25, wobei die Barriereschicht (92) gasundurchlässig ist.

27. Textiles Flächengebilde (10) nach Anspruch 25 bis 26, wobei die Barriereschicht (92) luftundurchlässig ist.

28. Textiles Flächengebilde (10) nach Ansprüchen 25 bis 27, wobei die Barriereschicht (92) flüssigkeitsundurchlässig ist.

29. Textiles Flächengebilde (10) nach Anspruch 1 und 25, wobei eine luftundurchlässige, flüssigkeitsundurchlässige und wasserdampfdurchlässige Barriereschicht (92) mit einer Seite des textilen Flächengebildes (10) verbunden ist.

30. Textiles Flächengebilde (10) nach den Ansprüchen 27 und 29, wobei die Barriereschicht (92) luftundurchlässig ist mit einer Luftdurchlässigkeit von weniger als 25 J/m².

31. Textiles Flächengebilde (10) nach den Ansprüchen 27 und 29, wobei die Barriereschicht (92) luftundurchlässig ist mit einer Luftdurchlässigkeit von weniger als 5 l/m².

32. Textiles Flächengebilde (10) nach den Ansprüchen 28 und 29, wobei die Barriereschicht (92) flüssigkeitsundurchlässig ist mit einem Wassereintrittsdruck von 0,13 Bar.

33. Textiles Flächengebilde (10) nach den Ansprüchen 25 bis 32, wobei die Barriereschicht (92) eine Membran ist.

34. Textiles Flächengebilde (10) nach den Ansprüchen 25 bis 33, wobei die Barriereschicht (92) mit einer Seite des textilen Flächengebildes (10) unter Verwendung einer diskontinuierlichen Klebeschicht verbunden ist.

35. Textiles Flächengebilde (10) nach den Ansprüchen 25 bis 33, wobei die Barriereschicht (92) durch wenigstens eine Naht mit einer Seite des textilen Flächengebildes (10) verbunden ist.

36. Textiles Flächengebilde (10) nach Ansprüchen 25 und 33, wobei die Barriereschicht (92) eine poröse Membran aus expandiertem Tetrafluorethylene (ePTFE) aufweist.

37. Textiles Flächengebilde (10) nach Anspruch 1, wobei das Polymermaterial (70) vor dem Füllen der Lücken als eine Flüssigkeit mit einer Viskosität von weniger als 3000 mPa/sec vorliegt.

38. Textiles Flächengebilde (10) nach Anspruch 1, wobei das Polymermaterial (70) vor dem Füllen der Lücken (60) als eine Flüssigkeit mit einer Viskosität von weniger als 2000 mPa/sec vorliegt.

39. Textiles Flächengebilde (10) nach Anspruch 1, wobei das Polymermaterial (70) vor dem Füllen der Lücken (60) als eine Flüssigkeit mit einer Viskosität von weniger als 1000 mPa/sec vorliegt.

40. Bekleidung mit einem textilen Flächengebilde (10) nach Anspruch 1.

41. Textile Flächengebildestruktur (80) mit wenigstens zwei Schichten:
a. die erste Schicht aufweisend ein textiles Flächengebilde (10) welches aufweist:
i. Garne (20) und Zwischenräume (30) zwischen den Garnen;
ii. wobei die Zwischenräume (30) zwischen den Garnen (20) eine Durchschnittsweite von größer als 100 µm aufweisen;
iii. wobei wenigstens ein Garn (20) mehrere Fasern (50) aufweist und Lücken (60) zwischen den Fasern (50) hat;
b. und die zweite Schicht eine wasserdampfdurchlässige Barriereschicht (92) aufweist, die mit wenigstens einer Seite der ersten Schicht verbunden ist,
c. wobei die Lücken (60) mit einem Polymermaterial (70) gefüllt sind.

42. Textile Flächengebildestruktur (80) nach Anspruch 41, wobei die erste Schicht und die zweite Schicht durch wenigstens einen Kleber miteinander verbunden sind.

43. Textile Flächengebildestruktur (80) nach Anspruch 41 bis 42, wobei die Barriereschicht (92) flüssigkeitsundurchlässig ist.

44. Textile Flächengebildestruktur (80) nach Ansprüchen 41 bis 43, wobei die Barriereschicht (92) gasundurchlässig ist.

45. Textile Flächengebildestruktur (80) nach Ansprüchen 41 bis 44, wobei die Barriereschicht (92) luftundurchlässig ist.

46. Textile Flächengebildestruktur (80) nach Ansprüchen 41 bis 45, wobei die Barriereschicht (92) eine poröse Membran aus expandiertem Tetrafluorethylen (ePTFE) aufweist.

47. Textile Flächengebildestruktur (80) nach Ansprüchen 41 bis 46, wobei das Polymermaterial (70) ausgewählt ist aus der Gruppe bestehend aus Silikonen, nicht schwellendem Polyurethan, amorphen Perfluorpolymer und Mischungen daraus.

48. Textile Flächengebildestruktur (80) nach Anspruch 41, wobei das Polymermaterial (70) wenigstens ein Silikon aufweist.

49. Textile Flächengebildestruktur (80) nach Anspruch 41, wobei die Zwischenräume (30) eine Durchschnittsweite von zwischen 150 µm und 250 µm aufweisen.

50. Textile Flächengebildestruktur (80) nach Ansprüchen 41 bis 49, mit einer Wasserabsorptionsrate von weniger als 50%.

51. Textile Flächengebildestruktur (80) nach Ansprüchen 41 bis 50, mit einer Wasserabsorptionsrate von weniger als 20%.

52. Verfahren zur Minimierung der Wasserabsorptionsrate eines textilen Flächengebildes (10), aufweisend die folgenden Schritte:
a. Bereitstellen eines textilen Flächengebildes mit Garnen (20) und Zwischenräumen (30) zwischen den Garnen (20), wobei die Zwischenräume (30) eine Durchschnittsweite von größer als 100 µm aufweisen, wobei wenigstens einer der Garne mehrere Fasern (50) aufweist und Lücken (60) zwischen den Fasern (50) hat,
b. Bereitstellen eines flüssigen Polymermaterials (70) mit einer Viskosität von weniger als 3000 mPa/sec.
c. Füllen der Lücken (60) mit dem Polymermaterial (70) während die Zwischenräume (30) offen bleiben.

53. Verfahren nach Anspruch 52, aufweisend einen weiteren Schritt d. des Härtens des textilen Flächengebildes (10) nach dem Schritt c.

54. Verfahren nach Anspruch 52, wobei das flüssige Polymermaterial (70) eine Viskosität von weniger als 2000 mPa/sec hat.

55. Verfahren nach Anspruch 52, wobei das flüssige Polymermaterial (70) eine Viskosität von weniger als 1000 mPa/sec hat.

## Revendications

1. Étoffe (10) comprenant :
a. des fils (20) et des interstices (30) entre les fils ;
b. les interstices (30) entre les fils ayant une largeur moyenne de plus de 100 µm ;
c. au moins un fil (20) étant composé de multiples fibres (50) ;
d. le ou les fils (20) comportant des vides (60) entre les fibres (50) ;
e. dans laquelle les vides (60) sont remplis d'un matériau polymère (70).

2. Étoffe (10) selon la revendication 1, dans laquelle les interstices (30) ont une largeur moyenne comprise entre 150 µm et 250 µm.

3. Étoffe (10) selon la revendication 1, dans laquelle le matériau polymère (70) est sélectionné dans le groupe constitué de silicones, de polyuréthane non gonflant, de perfluoropolymère amorphe et de mélanges de ceux-ci.

4. Étoffe (10) selon la revendication 1, dans laquelle le matériau polymère (70) se compose d'au moins un silicone (75).

5. Étoffe (10) selon l'une quelconque des revendications précédentes, dans laquelle le matériau polymère (70) contient un ou plusieurs additifs.

6. Étoffe (10) selon la revendication 5, dans laquelle les additifs sont sélectionnés dans le groupe constitué d'agents réfléchissants, d'agents résistant aux moisissures, d'agents modifiant le toucher, d'agents de viscosité, d'agents de rhéologie, d'agents de flexibilité, d'absorbeurs à ultraviolets, d'agents de remplissage, d'agents électroconducteurs, d'agents thermoconducteurs, d'agents d'absorption de rayonnement, d'ignifuges et d'agents de réflexion de rayonnement.

7. Étoffe (10) selon la revendication 6, dans laquelle les ignifuges sont des composés de bore, du trihydrate d'alumine, des oxydes d'antimoine avec des composés contenant un halogène, de l'hydroxyde de magnésium, et des composés organique ou inorganiques de phosphore.

8. Étoffe (10) selon l'une quelconque des revendications précédentes, dans laquelle les vides (60) sont complètement remplis du matériau polymère (70).

9. Étoffe (10) selon l'une quelconque des revendications précédentes, dans laquelle le ou les fils (20) possèdent une surface extérieure (22) et au moins les fibres (50) contenues dans la surface extérieure (22) sont incorporées dans le matériau polymère (70).

10. Étoffe (10) selon la revendication 9, dans laquelle la surface extérieure (22) est au moins partiellement dépourvue de matériau polymère (70).

11. Étoffe (10) selon l'une quelconque des revendications précédentes, ayant un taux d'absorption d'eau de moins de 50 %.

12. Étoffe (10) selon l'une quelconque des revendications précédentes, ayant un taux d'absorption d'eau de moins de 20 %.

13. Étoffe (10) selon l'une quelconque des revendications précédentes, ayant un taux d'absorption d'eau de moins de 10 %.

14. Étoffe (10) selon les revendications 1 et 2, dans laquelle les interstices (30) donnent à l'étoffe une perméabilité à l'air de plus de 300 l/m²/s.

15. Étoffe (10) selon l'une quelconque des revendications précédentes, ayant un taux de ruissellement chimique supérieur à 90 %.

16. Étoffe (10) selon l'une quelconque des revendications précédentes, dans laquelle les fibres (50) comprennent des multi-filaments continus, des fibres discontinues ou des combinaisons de ceux-ci.

17. Étoffe (10) selon l'une quelconque des revendications précédentes, dans laquelle l'étoffe (10) se présente sous la forme d'un tricot ou d'une étoffe tissée.

18. Étoffe (10) selon l'une quelconque des revendications précédentes, dans laquelle les fils (20) se composent de multiples fibres (50).

19. Étoffe (10) selon l'une quelconque des revendications précédentes, dans laquelle la ou les fils (20) sont sélectionnés dans le groupe constitué de polyoléfines, de polyamides, de polyester, de cellulose régénérée, d'acétate de cellulose, de rayonnes, d'acétates, d'acryliques, d'aramides, de verre, de modacryliques, de coton, de laine, de soie, de lin, de jute et de mélanges de ceux-ci.

20. Étoffe (10) selon l'une quelconque des revendications précédentes, dans laquelle la ou les fils (20) comprennent des filaments composés de polyester.

21. Étoffe (10) selon l'une quelconque des revendications précédentes, dans laquelle l'étoffe (10) a un poids compris entre 20 et 500 g/m².

22. Étoffe (10) selon l'une quelconque des revendications précédentes, dans laquelle l'étoffe (10) a un poids compris entre 75 et 350 g/m².

23. Étoffe (10) selon l'une quelconque des revendications précédentes, dans laquelle au moins une couche perméable (90) à la vapeur d'eau est adjacente à un côté de l'étoffe (10).

24. Étoffe (10) selon la revendication 23, dans laquelle la couche perméable (90) à la vapeur d'eau comprend une couche textile.

25. Étoffe (10) selon la revendication 23, dans laquelle la couche perméable (90) à la vapeur d'eau comprend au moins une couche barrière (92) perméable à la vapeur d'eau.

26. Étoffe (10) selon la revendication 25, dans laquelle la couche barrière (92) est imperméable aux gaz.

27. Étoffe (10) selon les revendications 25 à 26, dans laquelle la couche barrière (92) est imperméable à l'air.

28. Étoffe (10) selon les revendications 25 à 27, dans laquelle la couche barrière (92) est imperméable aux liquides.

29. Étoffe (10) selon les revendications 1 et 25, dans laquelle une couche barrière (92) perméable à la vapeur d'eau, imperméable aux liquides et imperméable à l'air est liée à un côté de l'étoffe (10).

30. Étoffe (10) selon les revendications 27 et 29, dans laquelle la couche barrière (92) est une couche imperméable l'air ayant une perméabilité à l'air inférieure à 25 l/m².

31. Étoffe (10) selon les revendications 27 et 29, dans laquelle la couche barrière (92) est une couche imperméable l'air ayant une perméabilité à l'air inférieure à 5 l/m².

32. Étoffe (10) selon les revendications 28 et 29, dans laquelle la couche barrière (92) est une couche imperméable aux liquides ayant une pression d'entrée d'eau de 0,13 bar.

33. Étoffe (10) selon les revendications 25 à 32, dans laquelle la couche barrière (92) est une membrane.

34. Étoffe (10) selon les revendications 25 à 33, dans laquelle la couche barrière (92) est fixée à un côté de l'étoffe (10). A l'aide d'une couche adhésive discontinue.

35. Étoffe (10) selon les revendications 25 à 33, dans laquelle la couche barrière (92) est fixée par au moins une couture à un côté de l'étoffe (10).

36. Étoffe (10) selon les revendications 25 et 33, dans laquelle la couche barrière (92) comprend une membrane poreuse composée de polytétrafluoroéthylène expansé (ePTFE).

37. Étoffe (10) selon la revendication 1, dans laquelle le matériau polymère (70), avant le remplissage des vides, existe sous forme d'un liquide ayant une viscosité inférieure à 3 000 mPa/s.

38. Étoffe (10) selon la revendication 1, dans laquelle le matériau polymère (70), avant le remplissage des vides (60), existe sous forme d'un liquide ayant une viscosité inférieure à 2 000 mPa/s.

39. Étoffe (10) selon la revendication 1, dans laquelle le matériau polymère (70), avant le remplissage des vides (60), existe sous forme d'un liquide ayant une viscosité inférieure à 1 000 mPa/s.

40. Vêtement comprenant une étoffe (10) selon la revendication 1.

41. Structure d'étoffe (80) comprenant au moins deux couches :
a. la première couche comprenant une étoffe (10) comprenant :
i. des fils (20) et des interstices (30) entre les fils ;
ii. les interstices (30) entre les fils (20) ayant une largeur moyenne de plus de 100 µm ;
iii. au moins un fil (20) étant composé de multiples fibres (50) et comportant des vides (60) entre les fibres (50) ;
b. et la seconde couche comprenant une couche barrière (92) perméable à la vapeur d'eau liée à au moins un côté de la première couche,
c. dans laquelle les vides (60) sont remplis d'un matériau polymère (70).

42. Structure d'étoffe (80) selon la revendication 41, dans laquelle la première couche et la seconde couche sont fixées l'une à l'autre par au moins un adhésif.

43. Structure d'étoffe (80) selon les revendications 41 à 42, dans laquelle la couche barrière (92) est imperméable aux liquides.

44. Structure d'étoffe (80) selon les revendications 41 à 43, dans laquelle la couche barrière (92) est imperméable aux gaz.

45. Structure d'étoffe (80) selon les revendications 41 à 44, dans laquelle la couche barrière (92) est imperméable à l'air.

46. Structure d'étoffe (80) selon les revendications 41 à 45, dans laquelle la couche barrière (92) comprend une membrane poreuse composée de tétrafluoroéthylène expansé (ePTFE).

47. Structure d'étoffe (80) selon les revendications 41 à 46, dans laquelle le matériau polymère (70) est sélectionné dans le groupe constitué de silicones, de polyuréthane non gonflant, de perfluoropolymère amorphe et de mélanges de ceux-ci.

48. Structure d'étoffe (80) selon la revendication 41, dans laquelle le matériau polymère (70) se compose d'au moins un silicone.

49. Structure d'étoffe (80) selon la revendication 41, dans laquelle les interstices (30) ont une largeur moyenne comprise entre 150 µm et 250 µm.

50. Structure d'étoffe (80) selon les revendications 41 à 49, ayant un taux d'absorption d'eau de moins de 50 %.

51. Structure d'étoffe (80) selon les revendications 41 à 50, ayant un taux d'absorption d'eau de moins de 20 %.

52. Procédé destiné à réduire au minimum le taux d'absorption d'eau d'une étoffe (10), comprenant les étapes suivantes :
a. utiliser une étoffe comprenant des fils (20) et des interstices (30) entre les fils (20), lesdits interstices (30) ayant une largeur moyenne de plus de 100 µm, au moins un desdits fils se composant de multiples fibres (50) et comportant des vides (60) entre les fibres (50),
b. utiliser un matériau polymère liquide (70) ayant une viscosité inférieure à 3 000 mPa/s,
c. remplir les vides (60) avec ledit matériau polymère (70) tandis que les interstices (30) restent ouverts.

53. Procédé selon la revendication 52, comprenant une étape d. supplémentaire consistant à faire durcir l'étoffe (10) après l'étape c.

54. Procédé selon la revendication 52, dans lequel le matériau polymère liquide (70) a une viscosité inférieure à 2 000 mPa/s.

55. Procédé selon la revendication 52, dans lequel le matériau polymère liquide (70) a une viscosité inférieure à 1 000 mPa/s.
